(19) Europäisches Patentamt / European Patent Office / Office européen des brevets

(11) **EP 2 396 117 B1**

(12) **FASCICULE DE BREVET EUROPEEN**

(45) Date de publication et mention de la délivrance du brevet:
**25.04.2018 Bulletin 2018/17**

(21) Numéro de dépôt: **10703873.9**

(22) Date de dépôt: **11.02.2010**

(51) Int Cl.:
**B02C 19/18** [(2006.01)]

(86) Numéro de dépôt international:
**PCT/EP2010/051752**

(87) Numéro de publication internationale:
**WO 2010/092136 (19.08.2010 Gazette 2010/33)**

(54) **PROCEDE ET SYSTEME DE VALORISATION DE MATERIAUX ET/OU PRODUITS PAR PUISSANCE PULSEE**

VERFAHREN UND VORRICHTUNG ZUR ZERKLEINERUNG VON MATERIALIEN UND/ODER PRODUKTEN DURCH ENERGIEIMPULSE

METHOD AND DEVICE FOR MATERIAL AND/OR SIZE REDUCTION WITH PULSED ENERGY

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **13.02.2009 FR 0950945**

(43) Date de publication de la demande:
**21.12.2011 Bulletin 2011/51**

(73) Titulaire: **Camille Compagnie d'Assistance Minière et Industrielle**
**95310 Saint Ouen l'Aumone (FR)**

(72) Inventeurs:
• **BENTAJ, Abdelaziz**
  **F-92390 Villeneuve La Garenne (FR)**
• **OUAYAHYA, Nadir**
  **F-91120 Palaiseau (FR)**
• **CLEMENT, Jean Louis**
  **F-75015 Paris (FR)**
• **TUTUSAUS, Jean Pierre**
  **F-78570 Andresy (FR)**

(74) Mandataire: **Regimbeau**
  **20, rue de Chazelles**
  **75847 Paris Cedex 17 (FR)**

(56) Documents cités:
WO-A-02/47803          WO-A-03/049865
DE-A1-102004 041 287   GB-A- 2 421 203

## Description

L'invention concerne un procédé et un système de valorisation des matériaux et/ou produits par puissance pulsée.

Elle trouve avantageusement, mais non limitativement, application dans différents domaines : le domaine énergétique, le secteur minier, l'environnement, le recyclage de combustibles nucléaires, le secteur des hydrocarbures, la chimie et tout autre secteur concerné par la libération, la dispersion, la fragmentation et la valorisation par séparation et recombinaison électrochimique de composants chimiques et moléculaires, , les matériaux composites.

Le broyage de matériaux joue un rôle important dans de nombreux procédés de fabrication ou de traitement de matériaux. Les procédés conventionnels présentent toutefois des inconvénients qui ont amené à développer des solutions nouvelles.

Le broyage de matériaux par décharges électriques est un procédé connu, présentant de nombreux avantages par rapport aux procédés conventionnels utilisant des broyeurs mécaniques, pour lesquels l'usure des pièces détériore le rendement du système.

Des exemples en ce sens ont notamment été décrits dans les différentes brevets ou demandes de brevet suivants : JP 10-180133 ; WO 2008/017172 ; WO 2005/032722 ; US 4 540 127; CA 2 555 476 EP 1 375 004; ou encore le document DE 10 2004 04 1287.

Classiquement, on applique une succession d'impulsions électriques de très haute puissance sur des produits et matériaux préalablement immergés dans un milieu ambiant liquide.

La résistivité du liquide ambiant ainsi que l'état transitoire de la matière lors des impulsions entraîne le passage de canaux d'arcs électriques chargés d'énergie à l'intérieur du matériau immergé et entre les grains du dit matériau, jusqu'à la création d'un arc électrique unique ou multiple entre les deux électrodes et passant à travers ledit matériau immergé.

Le passage de l'arc électrique à travers ledit matériau entraine la dislocation des grains au niveau des points de discontinuité (clivages, inclusions, fractures), au niveau des contacts inter granulaires, et la rupture de certaines liaisons chimiques suivie par la recombinaison chimique des éléments et molécules ainsi libérées en de nouveaux composés en équilibre de phase avec le milieu ambiant.

## PRESENTATION GENERALE DE L'INVENTION

Un but de l'invention est de proposer un procédé de valorisation de matériaux et/ou produits par puissance pulsée encore amélioré, notamment en termes de temps de traitement et de coûts énergétiques.

Un autre but de l'invention encore est de proposer un procédé de valorisation par puissance pulsée permettant des fragmentations et libérations de constituants unitaires avec des granulométries supérieures à celles communément rencontrées après un traitement par des méthodes traditionnelles et d'où la réduction du coût énergétique pour la valorisation desdits matériaux et/ou produits.

Un autre but encore de l'invention est de permettre une libération des éléments constitutifs des produits et/ou matériaux par fragmentation, pulvérisation, et le cas échéant séparation électrocinétique et électrochimique, voire par recombinaisons chimiques de certains de ces éléments, sans passer par des traitements pyrométallurgiques ou chimiques lourds et polluants.

Notamment, l'invention propose un procédé de valorisation de matériaux et/ou produits par puissance pulsée selon lequel on génère une succession de décharges électriques entre au moins deux électrodes dans un réacteur recevant un liquide ambiant ainsi que les matériaux et/ou produits à valoriser, caractérisé en ce que l'énergie de ces décharges électriques, la tension entre les électrodes, le temps de commutation, la fréquence des décharge sont choisis tels que lesdites décharges produisent une onde de choc mécanique qui se propage sur les matériaux et/ou produits à traiter dans le réacteur.

En complément le cas échéant, après une première étape de fragilisation par l'onde de choc mécanique ainsi produite, on fait subir aux produits et/ou matériaux une succession de décharges électriques dont l'énergie, la tension entre les électrodes qui les génèrent, le temps de commutation et la fréquence de décharge sont choisis telles que lesdites décharges réalisent un broyage du matériau par effet direct des décharges électriques.

Cette onde de choc mécanique qui se propage dans le réacteur et le cas échéant l'arc électrique complémentaire permet(tent) d'obtenir la fragmentation, séparation, pulvérisation des matériaux et/ou produits à traiter, et favorise(nt) la recombinaison chimique de quelques constituants ou molécules.

Dans tout le présent texte, on entend par matériau et/ou produit toute matière ou substance monophasique ou pluri-phasique (solide, liquide, gaz, vapeur, ...), mono ou pluri-constituants, pur ou composite, pouvant contenir des solides de cristallisation ou amorphes ; par exemple (liste non exhaustive) : minéral, minerai, déchet ou sous-produit d'une ou plusieurs activités, notamment industrielles ou humaines, tout produit devant subir une opération de broyage, fragmentation, pulvérisation, concassage, séparation en ses constituants, décontamination, valorisation avec comme objectif une augmentation de sa valeur ajoutée, les matériaux composites à base de fibres de carbone ou de résine et métaux (titane, acier, alliages).

Un tel procédé a l'avantage d'éviter l'utilisation de pièces mécaniques mobiles (cas des broyeurs mécaniques), de boulets, barres ou autres pièces d'usures (broyeurs à boulets, barres, cônes). Il en résulte une réduction des coûts de maintenance de ce procédé par rapport aux autres procédés.

Un autre avantage de ce procédé concerne la non-utilisation de produits chimiques hautement toxiques et réactifs inorganiques qui sont souvent nécessaires pour le traitement des minerais.

Un autre avantage de ce procédé tient en ce que la libération, la fragmentation, la séparation, la pulvérisation se produisent dans des temps très brefs grâce au temps de commutation des éclateurs qui déclenchent la décharge des condensateurs qui permet de restituer l'énergie stockée en des temps très brefs (puissances pulsées très élevées) au réacteur contenant les produits à traiter et/ou valoriser, ceci pour une consommation énergétique globale très faible.

Avantageusement, après une première étape de fragilisation par l'onde de choc mécanique ainsi produite, on fait subir aux produits et/ou matériaux une succession de décharges électriques dont l'énergie, l'intensité, la tension entre les électrodes qui les génèrent, les temps et fréquence de décharge sont choisis tels que lesdites décharges réalisent un broyage du matériau par effet direct des décharges électriques (arcs électriques). Egalement, l'invention propose un système de valorisation mettant en oeuvre un tel procédé.

## PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :

- La figure 1 présente un schéma du système polyfonctionnel tri-étagé ;
- La figure 2 présente un schéma de réacteur basé sur l'effet indirect ;
- La figure 3 présente un schéma de réacteur basé sur l'effet direct ;
- Les figures 4a et 4b présentent un type d'électrode multi pointes ayant des tiges coniques ;
- La figure 5a et 5b présentent un type d'électrode multi pointes pour lesquelles les tiges ont des sections carrées ;
- La figure 6 présente un ensemble de pilotage de système polyfonctionnel.
- La figure 7a présente une analyse qualitative par chromatographie gazeuse couplée à une détection par ionisation de flamme (GC - FID).
- La figure 7b présente une analyse par chromatographie gazeuse couplée à une détection spectrométrique de masse (GC-MS).
- Le tableau 1 présente la composition chimique du minerai traité en pourcentage ou en mg/Kg.
- La figure 8 présente une courbe granulométrique du minerai après 820 décharges électriques.
- Le tableau 2 présente le taux de libération des minéraux selon l'énergie injectée et la granulométrie des fragments.
- Le tableau 3 présente le degré d'abrasivité des particules de diamant en fonction de la granulométrie.
- La figure 9 présente une courbe granulométrique de la fragmentation de la poudre de diamant.

## DESCRIPTION D'UN OU PLUSIEURS MODES DE REALISATION OU DE MISE EN OEUVRE

### 1. Exemples de réalisation d'un système polyfonctionnel

#### 1.1. Etages et réacteurs

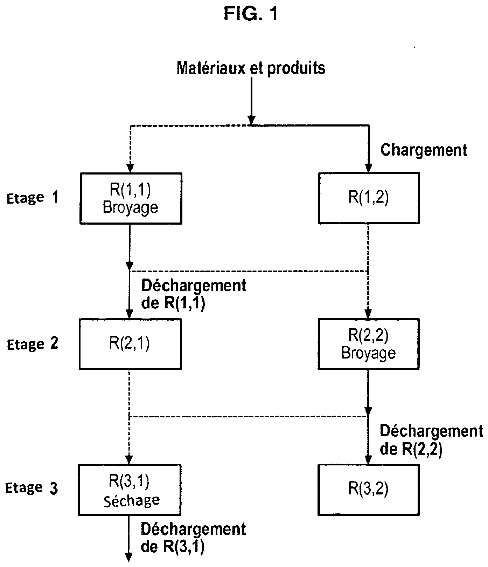

Le système polyfonctionnel de valorisation de matériaux et/ou de produits tel que représenté sur la figure 1 comprend plusieurs étages de réacteurs en série, en l'occurrence trois.

Dans l'exemple de cette figure, chaque étage comprend deux réacteurs, lesquels sont référencés R(i,j) sur la figure, où i et j sont des indices muets qui sont des nombres entiers tel que $1 \leq i \leq 3$ et $1 \leq j \leq 2$, les réacteurs étant répartis en trois étages (i) en série :

- Etage 1 : R(1,1) et R(1,2) - effet indirect (onde de choc mécanique).
- Etage 2 : R(2,1) et R(2,2) - effet direct (dislocation par arc électrique).
- Etage 3 : R(3,1) et R(3,2) - séchage.

L'étage 1 de traitement par onde de choc mécanique permet de fragiliser par onde de choc les matériaux et/ou produits à valoriser. Les matériaux ou produits ainsi fragilisés sont ensuite fragmentés et pulvérisés dans un second temps dans l'étage 2 (effet direct de l'arc électrique). L'étage 3 est un étage de séchage.

*L'étage 1 - effet indirect*

L'étage 1 - à effet indirect - comprend deux réacteurs en parallèle, fonctionnant en cycle décalé. On active un réacteur (en l'occurrence R(1,1)) pendant que l'autre (R(1,2)) est en phase de chargement ou de déchargement de matériaux et/ou produits.

L'onde de choc mécanique est générée dans le réacteur qui fonctionne, par décharge rapide d'énergie électrique dans le milieu réactionnel (liquide ambiant newtonien ou non newtonien).

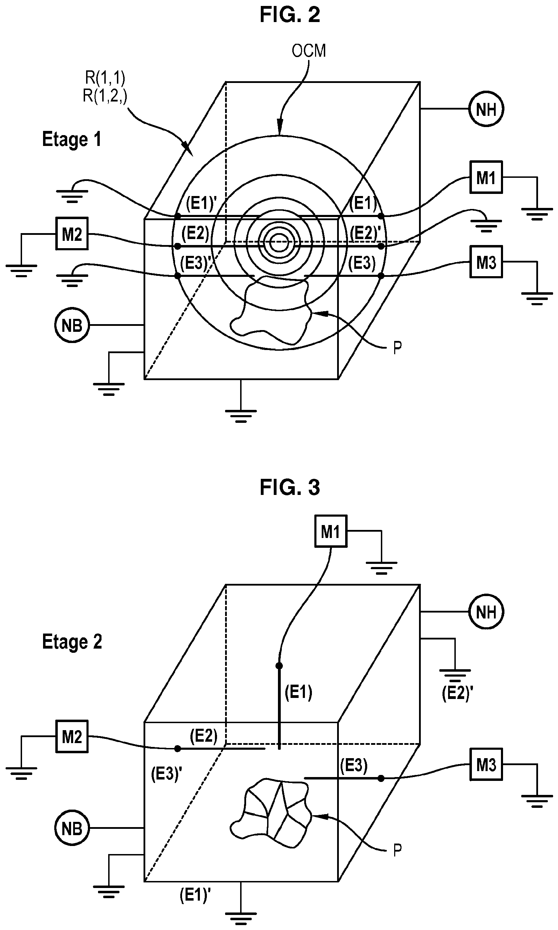

Comme l'illustre la figure 2, les réacteurs R(1,1) et R(1,2) (Etage 1) comportent plusieurs couples d'électrodes, en l'occurrence trois couples d'électrodes triaxiales (E1,E'1),(E2,E'2),(E3,E'3) (Figure 3). Chaque couple est associé à un module d'alimentation M1, M2, M3 haute tension et comprend d'une part une électrode multi-pointe E1, E2, E3 liée à la borne positive du module électrique haute tension M1, M2, M3 correspondant; l'autre électrode E'1, E'2, E'3 est plane et connectée à la masse (terre).

La distance entre deux électrodes (E1,E'1),(E2,E'2),(E3,E'3) d'un même couple est choisie inférieure à la distance seuil pour générer une décharge électrique (distance seuil qui dépend du champ électrique de claquage et de la tension appliquée entre l'anode et la cathode).

Le liquide ambiant qui contient les matériaux à traiter et/ou à valoriser est par exemple de l'eau dont les propriétés de changement de phase en fonction de la tension électrique et de la durée d'impulsion sont connues. Tout autre liquide newtonien ou non newtonien de résistivité connue ou mesurable peut bien entendu être utilisé. Sur la figure 2, on a représenté un niveau bas NB et un niveau haut NH entre lesquels le niveau du liquide dans le réacteur doit se trouver.

La forme, la dimension des réacteurs R(1,1) et R(1,2), ainsi que celles des électrodes sont choisies en fonction de l'application envisagée et des matériaux et/ou produits à traiter.

L'utilisation d'un réacteur à fond sphérique concave amplifie l'effet de l'onde de choc générée par les décharges électriques avec les réflexions sur la paroi sphérique du réacteur.

Les modules d'alimentation M1, M2, M3 stockent l'énergie électromagnétique dans des éléments de charge (condensateurs ou/et bobines à hautes performances : générateur de Marx), puis la libèrent dans un circuit de décharge à travers un système de commutation très rapide (éclateurs avec un temps de commutation par exemple compris entre 250 ns et 900 ns, préférentiellement supérieur à 500 ns).

Les tensions entre électrodes sont de l'ordre de plusieurs kilovolts.

L'énergie utilisée pour chaque réacteur est de l'ordre de 600 joules à 50000 joules, par exemple de 600 à 12000 joules selon les applications.

La fréquence de fonctionnement varie entre 0.5 Hz et 5 Hz, variant selon les applications, par exemple entre 1 et 2 Hz pour certaines applications, et entre 2 et 5 Hz pour d'autres applications..

Le temps mort entre deux décharges électriques consécutives varie entre 200 ms et 1 s.

Avec l'effet indirect, un arc électrique et un plasma sont créés, mais l'onde de choc mécanique OCM générée a un effet dominant lors du broyage, concassage, fragmentation, pulvérisation et séparation des éléments par compression mécanique sur lesdits matériaux et/ou produits à traiter.

Le brassage induit par les impulsions dans la cuve (réacteur) provoque une homogénéisation des fragments en facilitant leur séparation.

Cette onde de choc mécanique OCM est due à une succession de surpressions (compressions) et de sous-pressions (détentes) générées par les décharges électriques à travers des électrodes distancées. La décharge des électrodes en milieu aqueux produit une explosion et un plasma chaud.

L'énergie mécanique transmise par l'onde de choc au milieu est donnée par l'équation (1) :

$$E = \frac{1}{2} \rho \, u^2 \qquad\qquad (1)$$

Où $\rho$ est la masse volumique du milieu et $u$ est la vitesse du front de l'onde.

L'intensité de l'onde de choc est proportionnelle à la variation du courant de décharge électrique car elle existe une relation entre la puissance délivrée dans le réacteur et la variation du courant de décharge électrique (équation .2).

$$\frac{dE}{dt} = 2\left[\frac{k\,s'^2}{3}\left(\frac{di}{dt}\right)_{t=0}\right]^{2/3} \qquad\qquad (2)$$

$i$(t) étant le courant de décharge électrique dans le circuit et $s'$ est la distance entres les deux électrodes générant l'arc électrique et l'onde de choc.

L'énergie de l'onde de choc peut s'écrire sous la forme suivante :

$$E(t) = \frac{4\pi s^2}{\rho c} \int_0^t p^2(t)dt \qquad (3)$$

Où $\rho$ est la masse volumique du milieu, $c$ est la célérité de l'onde dans le milieu, $s$ est la longueur du canal d'arc générée et $p$ est la surpression dans le milieu qui est donnée par la relation (équation 4) :

$$p(t) = p_0 e^{-t/\tau} \qquad (4)$$

$p_0$ (équation 5) étant la valeur maximale de la surpression produite par l'onde de choc et $\tau$ une constante de temps qui dépend du module électrique.

$$p_0 = \frac{1}{s}\sqrt{\frac{\rho c E}{2\pi\tau}} \qquad (5)$$

*L'étage 2 - effet direct*

Dans le cas de l'effet direct, l'arc électrique traverse le liquide et passe à travers les matériaux et/ou produit à valoriser.

Les réacteurs R(2,1) et R(2,2) (Etage 2) comprennent à cet effet chacun trois couples d'électrodes pointe/plane (figure 2) (on peut augmenter le nombre d'électrodes afin d'amplifier l'effet de la décharge électrique sur le matériau et/ou produit à traiter en modifiant aussi la géométrie du réacteur, par exemple : un polyèdre avec un nombre de faces paire, une face sert de d'anode et l'autre en face sert de cathode).

De la même façon que pour l'étage 1, l'énergie électrique est stockée dans des modules d'alimentation M1, M2, M3, puis libérée dans un circuit de décharge via un système de commutation ultra rapide avec un temps de commutation compris entre 200 ns à 900 ns, les commutateurs pouvant varier selon les applications, avec par exemple des temps de commutation compris entre 200 ns et 500 ns, ou entre 250 ns et 900 ns.

Les tensions entre électrodes sont de l'ordre de plusieurs kilovolts.

L'énergie utilisée pour chaque réacteur est de l'ordre de 50 joules à 1000 joules, pouvant être de l'ordre de 100 joules à 1000 joules pour certaines applications.

La fréquence de fonctionnement varie entre 1 Hz et 40 HZ, pouvant varier entre 1 Hz et 20 Hz selon les applications..

Le temps mort entre deux décharges électriques consécutives varie entre 1 ms et 1 s.

Les éclateurs de l'étage 1 et de l'étage 2 (déclencheurs de la décharge rapide des condensateurs stockant de l'énergie) peuvent être installés dans une enceinte fermée, remplie d'un gaz inerte (par exemple : azote) avec deux avantages :

- rendre la tension de rupture indépendante du taux d'humidité existant,
- et permettre la récupération et l'évacuation de l'ozone généré de façon plus simple.

Ce deuxième étage à effet direct permet de séparer les différents éléments constitutifs desdits matériaux et/ou produits par la traversée de l'arc électrique entraînant une séparation sélective des éléments qui est due au fait que le milieu newtonien ou non-newtonien devient plus résistant électriquement que les matériaux et/ou produits à traiter pendant le passage de l'arc, à la variation de la résistivité des différents éléments constitutifs desdits matériaux et/ou produits et au phénomène de résonance.

Dans le cas de l'effet direct, la présence de sphères élastomères dans le réacteur ayant une raideur supérieure à 1 N/cm et le cas échéant un coefficient d'amortissement visqueux adapté (compris de préférence entre 0.5 et 2 N.s/m) permet d'améliorer le traitement et de la valorisation des produits. Ces élastomères atténuent l'effet de l'onde de choc, ce qui favorise l'effet de l'arc électrique, d'où une efficacité meilleur avec l'effet direct (Etage 2).

*L'étage 3 - séchage par micro-ondes*

Les réacteurs R(3,1) et R(3,2) comportent chacun un générateur de micro-ondes.

Le troisième étage sert de séchage de matériaux et/ou produits par induction thermique due aux micro-ondes générées par ce générateur de micro-ondes.

Ceci facilite par exemple la séparation des éléments constituant les matériaux et/ou produits une fois fragmentés sans recours à des méthodes de séchage classiques qui sont coûteuses.

Les trois étages mentionnés ci-dessus peuvent toutefois être utilisés dans un ordre quelconque.

Par exemple, l'étage de séchage peut être utilisé, préalablement au broyage par effet direct - par exemple avant ou après la fragilisation par effet indirect - pour la fragilisation desdits matériaux et/ou produits par évaporation des poches d'eau présentes à l'intérieur, ce qui facilite le broyage et la séparation dans l'étage de traitement par effet direct.

Egalement, un ou deux des étages (i) peuvent ne pas être utilisés.

En variante encore, les trois étages ci-dessus peuvent être modifiés en un système continu, tout en conservant les phénomènes qui sursoient à la valorisation des matériaux et produits.

L'efficacité du procédé (direct et indirect) est liée à la configuration géométrique des électrodes et du réacteur, au contenu énergétique et au profil chronologique du système d'ondes de choc générées.

On peut remarquer que :

- des bulles de vapeur se forment localement dans le milieu liquide (expansion) et disparaissent après (implosion). L'énergie libérée en phase d'implosion est supérieure à celle libérée en phase d'expansion.
- le réglage des paramètres opératoires permet de solliciter le matériau ou produit à valoriser de façon à :

  - exciter simultanément le plus grand nombre possible de modes propres du matériau ou produit.
  - s'approcher d'une sollicitation pratiquement instantanée (Dirac), à profil oscillatoire limité dans le temps.
  - atteindre une impédance acoustique dans le matériau ou produit à valoriser d'au moins : $3\ 10^6$ (kg/m$^2$.s).

Dans ce contexte, la brisance du matériau et/ou produit à valoriser permet d'une part d'atteindre un taux de cisaillement suffisant, d'autre part d'obtenir une fragmentation sélective, ce qui optimise l'indice de Bond réalisé.

### 1.2. Multi-électrodes et électrode multi-pointes

Le choix des électrodes dépend du type d'application envisagée et du matériau et/ou produit à traiter. Afin d'élargir le champ d'exposition dudit matériau et/ou produit aux arcs électriques et multiplier la génération des ondes de choc, plusieurs couples d'électrodes pointes/pointes, pointes/planes ou multi-pointes/planes peuvent être utilisés dans le système polyfonctionnel, ainsi l'effet de broyage, fragmentation et séparation varie d'une configuration à l'autre.

Un meilleur rendement est toutefois obtenu avec une configuration d'électrodes multi-pointes/planes.

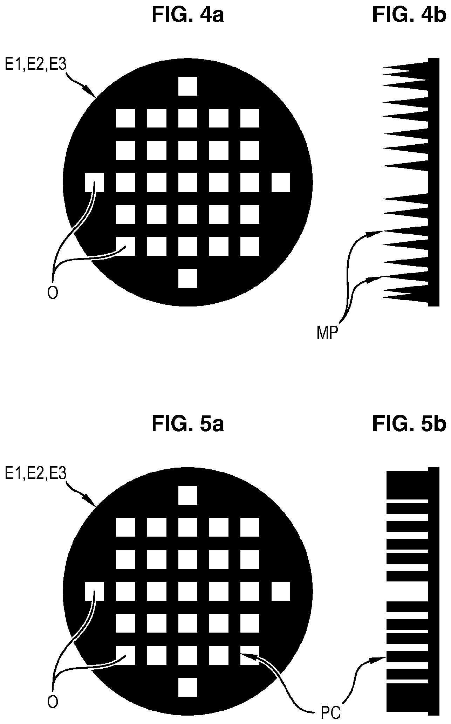

Les figures 4a, 4b, 5a et 5b montrent deux exemples d'électrodes multi-pointes.

Dans le cas des figures 4a et 4b, il s'agit de multi-pointes MP coniques, alors que dans le cas illustré sur les figures 5a et 5b, il s'agit de tiges dont les sommets sont des carrés (pointes carrées PC).

Les pointes sont elles-mêmes séparées par des ouvertures O permettant d'atténuer l'effet de retour de l'onde de choc.

Lors d'une décharge électrique, chaque tige est considérée comme quatre pointes adjacentes ce qui entraîne leur auto-nettoyage par le passage de l'arc électrique (dégagement des microbulles présentes à proximité de des pointes).

Cet auto-nettoyage permet d'améliorer le rendement de broyage, fragmentation et séparation des éléments constitutifs des matériaux et/ou produits traités.

Par exemple, dans le cas d'un étage de fragilisation par onde de choc mécanique (effet indirect), un couple d'électrodes multi-pointe (figure 4 et 5) et plane est introduit dans un réacteur ; le support de l'électrode contient par exemple 68 emplacements (voire plus) séparés par des ouvertures pour atténuer l'effet du retour de l'onde de choc. Sur chaque emplacement est installée une pointe conique ou une tige dont le sommet est carré ce qui correspond à quatre pointes (une pour chaque sommet du carré).

On notera qu'une forme polyédrique est avantageuse pour les réacteurs, puisqu'elle permet l'introduction de plusieurs couples d'électrodes dans chaque réacteur (de 1 à 15 couples par exemple).

Un réacteur polyédrique peut toutefois être remplacé par un réacteur cylindrique à fond sphérique concave où l'anode a une forme multi-pointes (figures 4a, 4b et 5a, 5b) et où la cathode est plane.

### 1.3. Système de pilotage

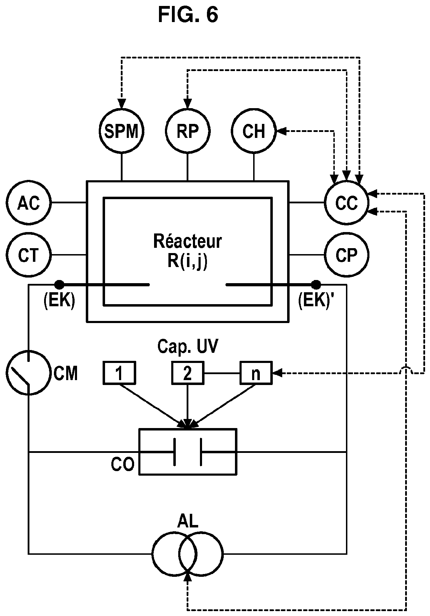

La figure 6 présente un ensemble de pilotage du système polyfonctionnel de valorisation des matériaux et/ou produits.

Il comporte une unité de contrôle CC qui commande des éclateurs CM et un générateur de haute tension AL qui échangent avec différents capteurs. On utilise des générateurs de Marx dans le cas de l'effet direct, et on utilise des électrodes initiatrices dans le cas de l'effet indirect. Les différents capteurs comprennent par exemple un spectrographe de masse SPM, un chromatographe CH, des capteurs de pression et de température CP et CT, ainsi que des capteurs de rayonnements UV.

L'ensemble comporte également des moyens d'acquisition et de réglage des paramètres de fonctionnement permettant

- L'acquisition des données ;
- Le contrôle commande ;
- Le réglage des paramètres fondamentaux de fonctionnement en particulier (liste non exhaustive) :

  1. énergie stockée;
  2. tension appliquée;
  3. temps de décharge ;
  4. fréquence de décharge ;
  5. intensité de crête ;
  6. temps de résidence dans le réacteur ;

L'efficacité de la réduction des dimensions du matériau et/ou produit à valoriser est mesurable par les méthodes de la théorie de la comminution (indice de BOND, ...).

• **Contrôleur du générateur de haute tension**

Le stockage de l'énergie électrostatique dans des condensateurs CO du module d'alimentation est assuré par le générateur de haute tension AL. Ce générateur AL est commandé à distance par la même commande numérique du système de pilotage du système polyfonctionnel (unité de contrôle CC). Avec ce type de générateur, on a la possibilité de relever la tension seuil du déclenchement du premier éclateur dans le circuit électrique et qui amorce la décharge rapide des condensateurs CO.

Ceci permet de comparer la tension seuil donnée par la loi de Paschen et celle délivrée par le générateur de haute tension.

• **Contrôle de l'impédance Z du réacteur**

L'enregistrement et l'analyse des signaux concernant la tension aux bornes du réacteur et le courant de décharge électrique qui traverse le circuit permet de déterminer l'impédance Z de la charge (réacteur) à partir du déphasage entre les deux signaux et qui dépend à la fois des composants du circuit électrique en question et du matériau et/ou produit traité.

Pour un fonctionnement du procédé polyfonctionnel à impédance Z constante, il suffit de modifier la distance inter-électrodes dans le réacteur à l'aide un système de motorisation automatisé et inclus dans ledit système de pilotage.

• **Automatisme de capteurs de pression, température et UV, chromatographe et spectroscope de masse**

On associe au système polyfonctionnel des appareils de mesure et d'analyse : capteurs de pression CP, thermocouples CT, détecteurs de rayonnement UV (capUV), analyseur chromatographe CH, spectroscope de masse SPM, etc. Le contrôle de ces moyens de mesure et d'analyse est assuré par l'intermédiaire de la commande numérique CC du système de pilotage du système polyfonctionnel.

**1.4. Détection des rayonnements UV, chromatographie et spectroscopie de masse**

*Rayonnements UV*

L'analyse des signaux de détection des rayonnements UV émis par les arcs électriques qui se déclenche dans les éclateurs (liant les condensateurs) et entre les électrodes introduites dans un réacteur permet de savoir si ledit système polyfonctionnel fonctionne et en particulier si la décharge des condensateurs de haute tension s'est produite. Ces signaux en question sont transmis vers le système de pilotage via des fibres optiques pour éviter des perturbations causées par le champ électromagnétique qui règne lors du fonctionnement dudit système polyfonctionnel.

Lorsque le système de pilotage a détecté, à travers ces informations, la non-décharge des condensateurs, il commande la mise à la terre de l'ensemble des condensateurs pour les décharger et éviter le risque de les endommager. Cela réduit le coût d'entretien et de maintenance dudit procédé polyfonctionnel.

*Chromatoaraphie/spectroaraphie de masse*

Lors du traitement des matériaux et/ou produits par le système polyfonctionnel, des gaz se génèrent à travers des réactions chimiques (par exemple $H_2S$).

L'analyse de ces gaz par un chromatographe et un spectroscope de masse pendant le déroulement des essais permet de délivrer des informations concernant l'état d'avancement de broyage, fragmentation et séparation des éléments constituants les matériaux et/ou produits traités.

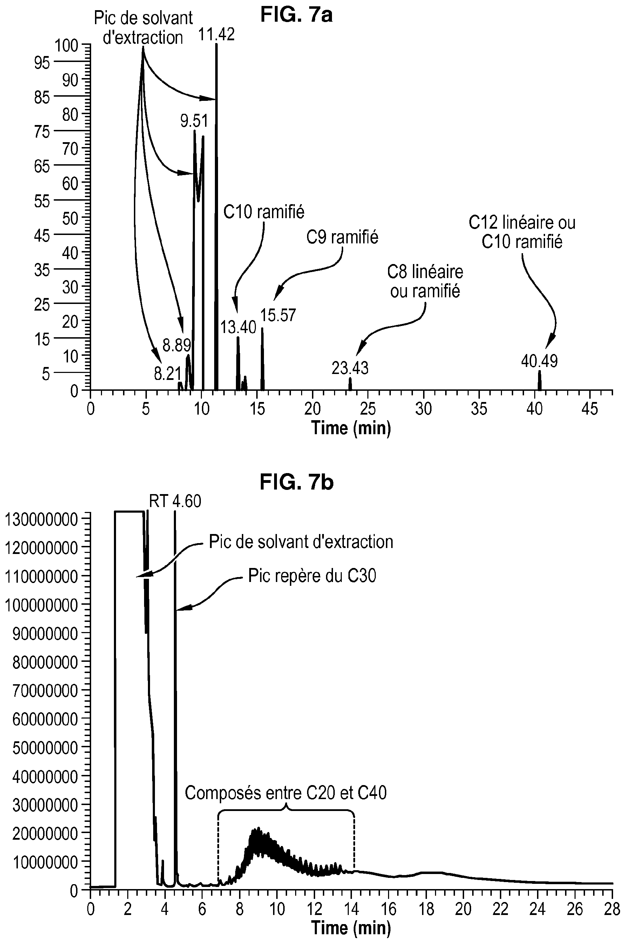

L'analyse d'une partie des matériaux et/ou produits en cours de traitement par le système polyfonctionnel en temps réel ou après arrêt des décharges électriques par chromatographie et spectroscopie de masse (figures 7a et 7b) permet d'obtenir des informations notamment utilisées pour optimiser l'énergie injectée dans le réacteur en limitant ou arrêtant les décharges électriques. Elles peuvent être également exploitées pour automatiser le chargement et le déchargement des réacteurs. Les figures 7a et 7b montrent des pics correspondant à des chaines carboniques données.

La figure 7a montre une analyse qualitative de sable bitumineux après un traitement par le système polyfonctionnel, on observe des pics qui correspondent à des hydrocarbures ayant un certain nombre de liaisons carbone/carbone.

La figure 7b représente une analyse par chromatographie gazeuse couplée avec une détection par spectrométrique de masse, on constate la présence d'un pic correspondant à des composés entre C20 et C40.

Par exemple, le système peut comprendre une base de données qui recense pour des produits donnés des courbes granulométriques en fonction de taux de libération gazeux mesurés, d'énergie déployée, de nombre de tirs (décharges électrique) et des gaz générés.

*Autres mesures*

La mesure de la pression à l'intérieur du réacteur en quelques points permet d'évaluer l'effet de l'onde de choc générée en tenant compte des caractéristiques mécaniques des matériaux et/ou produits à traiter ou à valoriser.

Les produits obtenus sont en outre analysés par granulométrie laser ou sur une colonne de tamis à granulométrie décroissante (variant entre quelques $\mu$m et quelques mm).

Dans le cas des applications (exemple : minerais et minéraux, sable et schiste bitumineux, etc...) où le système polyfonctionnel génère des gaz tel le dihydrogène sulfuré $H_2S$ lors de la valorisation desdits matériaux et/ou produits, la récupération de ce gaz et la mesure de sa concentration permet d'avoir des éléments importants sur l'état de broyage et de la fragmentation des matériaux et/ou produits. Si la concentration de ce gaz a tendance à se stabiliser, cela s'explique par le fait que la séparation de l'élément souffre présent dans les matériaux et/ou produits a atteint son optimum.

## 2. Exemples d'applications spécifiques du procédé polyfonctionnel

Les exemples ci-dessous sont donnés à titre illustratif et ne se veulent pas limitatifs.

### 2.1. Traitement des minerais (métalliques, non métalliques) et minéraux industriels

Les minerais sont des roches particulières contenant, en proportions économiquement récupérables, des métaux, minéraux et autres éléments nécessaires aux activités économiques industrielles ou agricoles. Schématiquement ils sont constitués des minéraux proprement dit et d'une gangue stérile en proportion variable selon le type de minerai et le type de gisement.

D'un point de vue chimique, ils peuvent soit être constitués de sulfures métalliques (pyrite, pyrrhotine, chalcopyrite, sphalérite, molybdénite, galène, etc.), d'oxydes (magnétite, rutile, etc.,) de carbonates (smithsonite, calamine, etc..), ou de toute autre association chimique. Ils peuvent aussi être composés de métaux ou minéraux natifs ou recherchés tels que : or, diamant, émeraudes, minéraux industriels ; disthène, grenats, sillimanites, wollastonites, phosphates, etc..

Pour récupérer les métaux ou minéraux contenus dans les minerais, une série d'opérations est nécessaire, en fonction du type de minerai extrait : concassage primaire et secondaire, broyage, flottation, concentration mécanique ou chimique, cyanuration, grillage, etc; jusqu'à l'obtention d'un concentré marchand.

Le procédé proposé peut s'appliquer tant aux premières étapes du traitement du minerai (fracturation, fragmentation, libération des constituants, homogénéisation et dispersion des produits), que dans les étapes de traitement pour l'amélioration des produits obtenus lors du traitement primaire.

Notamment, les minerais et minéraux sont soumis successivement à des ondes mécaniques (Etage 1) et à la traversée des arcs électriques (Etage 2).

L'énergie utilisée est comprise entre 100 joules et 1000 joules pour l'effet direct (Etage 2) ; et varie entre 5000 joules et 10000 joules dans le cas de l'effet indirect (Etage 1).

La fréquence de fonctionnement (de récurrence) varie entre 1 Hz et 2 Hz pour l'étage 1 et entre 1 Hz et 20 Hz pour l'étage 2.

Le temps mort entre deux décharges électriques consécutives varie entre 1 ms et 1 s.

Dans l'étage 2, l'impulsion électrique générée a travers le matériau entraine la dislocation des grains aux contacts inter granulaires et aussi à l'intérieur des grains eux même en fonction de leurs caractéristiques propres de résistivité électrique et de leur fréquence de résonance.

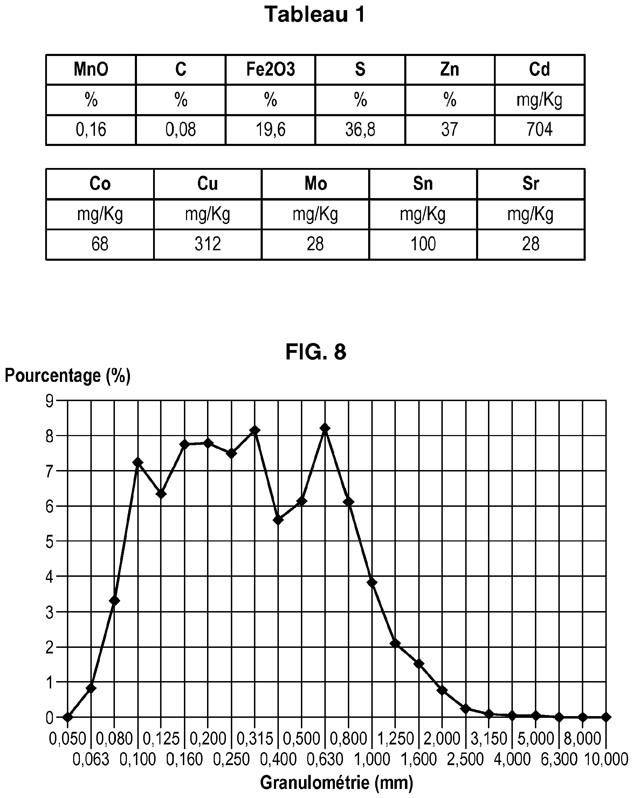

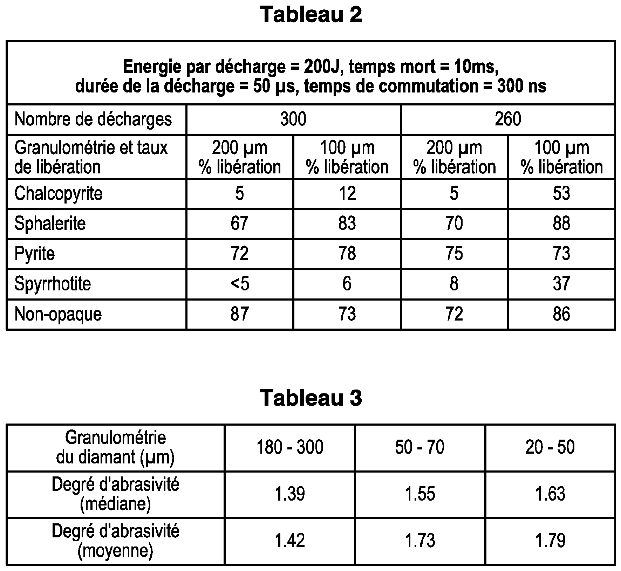

A titre d'illustration, l'application du système polyfonctionnel sur un minerai d'une masse de 795 g et dont la composition chimique est représentée dans le tableau 1, permet d'obtenir les résultats que montre la courbe de la figure 8 après 820 décharges électriques transmettant chacune au minerai une énergie de 200 J, avec un temps mort de 10 ms et une durée moyenne de décharge comprise entre 40 et 50 $\mu$s, cette courbe montre que la majorité de fragments a une granulométrie comprise entre 80 et 600 $\mu$m.

L'impulsion électrique générée à travers le matériau entraine la dislocation des grains aux contacts inter granulaires et aussi à l'intérieur des grains eux même en fonction de leurs caractéristiques propres de résistivité électrique et de leur fréquence de résonance. Ce phénomène entraine donc la libération de la quasi totalité des grains les uns des autres des les premiers instants de la réaction.

Le procédé permet donc d'obtenir des degrés de libération très élevés (supérieurs à 70% pour certains minéraux, pyrite, sphalérite dans des minerais de zinc par exemple), pour des granulométries supérieures à 200$\mu$m, alors que ce résultat nécessite des granulométries très inférieurs à 100$\mu$m par les techniques traditionnelles.

Par exemple, le taux de libération des minéraux peut atteindre 80 % pour une granulométrie située dans l'intervalle [100 $\mu$m;200 $\mu$m] (tableau 2).

La charge électrique de très haute énergie du matériaux et les conditions particulières du milieu ambiant lors de l'impulsion (transition entre une phase conductrice et une phase résistante, génération d'ions OH$^-$ et H$^+$ libres en contact avec un milieu hautement énergétique, excitation des couches atomiques externes dans les cristaux provoquant une dilatation « explosive » et transitoire des liaison atomiques), entraine la rupture des liaisons « faibles » (par exemple Mo-S, Fe-S, Cu-S, Pb-S, etc.) et l'expulsion d'ions métalliques et des ions sulfures dans le milieu ambiant, où ils se recombinent avec les ions OH$^-$ pour donner des hydroxydes métalliques, et avec les ions H$^+$ pour donner des sulfures d'hydrogène dans le cas des sulfures.

On observe un fort dégagement de H$_2$S durant les tests et une apparition d'auréoles réactionnelles « expulsives » autour des grains de pyrite et sphalérite, voire la dissolution d'un pourcentage non négligeable du cuivre dans le milieu ambiant lors des mêmes tests.

Ces réactions chimiques électrocinétiques ont pour effet une élimination du soufre présent dans des minerais et donc un enrichissement en métaux valorisables sans passer préalablement par une étape d'enrichissement spécifique par des réactifs chimiques polluants.

Le sulfure d'hydrogène dégagé lors du broyage de certains matériaux et/ou produit (en particuliers certains minerais) présente des risques toxiques, et pour des raisons de sécurité, le H$_2$S est neutralisé par voie chimique soit dans le réacteur soit à l'extérieur (avec addition de produits chimiques). On peut citer à titre d'exemple sa réaction avec la chaux CaO :

$$Ca0 + H_2S = CaS + H_2O$$

Le traitement proposé présente donc le double avantage :

- d'accroître la fragmentation et la libération des constituants unitaires du minerai à des granulométries supérieurs à celles communément nécessaires, d'où un gain de temps et d'énergie très significatif, d'une part, et
- de favoriser l'enrichissement du minerai par voie d'électrocinétique chimique sans passer par des réactifs et autres traitements polluants, d'autre part.

**2.2. Fragmentation et séparation de grenatites à molybdène**

Les essais réalisés sur des grenatites à molybdène en provenance du Maroc, s'apparentent fortement aux essais sur les minéraux sulfurés précédemment décrits.

Le minerai étudié est constitué par des skarns à grenats extrêmement abrasifs et durs enfermant de 1 à 5% de molybdénite, ainsi que de la scheelite (minerai de tungstène,) et de la chalcopyrite.

La roche est très difficile à concasser et le broyage du minerai par des méthodes traditionnelles, pour arriver à une maille de libération de l'ordre de 100$\mu$m est long et très onéreux.

Par ailleurs, la molybdénite (MoS), présente des caractéristiques lubrifiantes et apparaît sous forme de fines lamelles qui sont écrasées et matées lors du broyage, et on évalue à près de 20% les pertes de ce métal en cours de broyage.

Le traitement par le procédé polyfonctionnel apporte une solution efficace à la fragmentation de la grenatite et à la valorisation du minerai.

L'énergie utilisée est comprise entre 50 joules et 1000 joules pour l'effet direct (Etage 2) ; elle varie entre 1000 joules et 50000 joules dans le cas de l'effet indirect (Etage 1).

La fréquence de fonctionnement (de récurrence) varie entre 1 Hz et 2 Hz pour l'étage 1 et entre 5 Hz et 40 Hz pour l'étage 2.

Le temps mort entre deux décharges électriques consécutives varie entre 1 ms et 1 s.

A titre d'exemple et pour un essai effectué sur ce type de minerai dans l'étage 2 (effet direct), l'application de 300 impulsions (400 J par décharge) permet de fragmenter totalement la grenatite qui se trouve réduite en une farine de granulométrie de l'ordre de 500 $\mu$m. Avec 300 impulsions, la majorité du produit est fragmentée et réduite à une granulométrie de 200 $\mu$m. Les grains de molybdénite (MoS) sont totalement libérés de leur matrice de grenat des 200$\mu$m. Sur le simple point de vue des effets mécaniques, le procédé polyfonctionnel « Système polyfonctionnel » est donc capable de broyer et microniser une grenatite sans aucune usure de pièces mobiles, sans matage et avec un taux de libération élevé, et une meilleure récupération qu'avec les méthodes traditionnelles.

### 2.3. Eco-industrie-Matériaux Composites

Les matériaux composites sont d'excellents candidats pour ledit système polyfonctionnel qui permet de désassembler les composites non miscibles sans recours à des produits chimiques. On peut citer à titre d'exemples non exhaustifs, deux types principaux de matériaux composites :

- Fibres de verre (GLARE : GLAss REinforced)
- Panneaux photovoltaïques
- Les matériaux composites comprenant des fibres de carbone

La plupart des composites excepté le béton armé sont à base de fibres minérales ou synthétiques liées par des polymères thermodurcissables qui rendent difficile leur recyclage. Elles sont en plus souvent intercalées entre des couches métalliques (alliages d'aluminium ou autres métaux). Aucune technologie actuelle, hormis la dissolution dans des acides onéreux et très polluants, ne permet la récupération des fibres et leur recyclage.

Le milieu liquide utilisé dans cette méthode est l'eau, mais tout autre liquide newtonien ou non newtonien peut être utilisé à condition de connaitre sa résistivité électrique et qu'elle soit adaptée.

Plusieurs exemples peuvent être évoqués dans le cadre de cette application.

### a) Séparation du film en plastique résine acrylobutadiène styrène inséré entre deux couches de verre dans les pare-brises feuilletés

L'application du système polyfonctionnel au verre feuilleté consiste à séparer le film en plastique résine (Acrylo-Butadiène-Styrène : ABS) inséré entre deux couches de verre par la technique utilisée dans ce procédé (effet direct). Les impulsions électriques générées par le système polyfonctionnel provoquent la fragmentation du verre feuilleté et la séparation de l'ABS et du verre par l'effet mécanique des impulsions (dilatation et apparition de contraintes « explosives » dans le verre). Le faible nombre d'impulsions nécessaires à la fragmentation du verre, ne permet pas aux réactions d'électrocinétique chimique d'agir sur la structure moléculaire de l'ABS de manière significative. Le feuillet d'ABS est donc séparé aisément du verre sans traitement chimique particulier.

Les matériaux sont soumis à des ondes mécaniques (Etage 1) et à la traversée d'arcs électriques (Etage 2).

Pour cette application, l'étage 2 est suffisant pour valoriser ce type de matériaux. On obtient des résultats très efficaces (fragmentation et séparation des éléments constituants ce type de matériaux) à partir de 300 décharges électriques ayant chacun une énergie de 500 J, la durée moyenne des ces décharges est de l'ordre de quelques dizaines de $\mu$s (comprise entre 40 et 50 $\mu$s), le temps de commutation est compris entre 250 et 500 ns, le temps mort séparant deux décharges successives est compris de préférence entre 10 et 100 ms et la fréquence de récurrence est comprise entre 8 et 40 Hz.

On obtient la fragmentation du verre et la séparation des différents éléments constitutifs de type de matériaux composites : résine et film en plastique.

### b) Fragmentation des panneaux photovoltaïques et séparation des différents constituants

Les panneaux photovoltaïques font partie des matériaux composites, ils sont composés en général de verre trempé, polymères, silicium, aluminium et tedlar (fluorure polyvinylique). Le procédé permet de fragmenter ce type matériaux et de séparer aisément ses différents éléments constitutifs par une séparation sélective due à l'arc électrique qui traverse ces matériaux. Ladite séparation sélective s'explique par la variation de la résistivité des différents éléments présents dans les panneaux photovoltaïques.

Les produits récupérés sont : particules et fragments de verre, silicium, aluminium, polymères (ex : EVA) et le tedlar (fluorure polyvinylique).

Lesdits panneaux photovoltaïques sont soumis à des ondes mécaniques (Etage 1) et à la traversée des arcs électriques (Etage 2).

L'énergie utilisée est comprise entre 400 joules et 1000 joules pour l'effet direct (Etage 2) et elle varie entre 6000 joules et 10000 joules dans le cas de l'effet indirect (Etage 1).

La fréquence de fonctionnement (de récurrence) variant entre 0.5 Hz et 2 Hz pour l'étage 1 et entre 5 Hz et 20 Hz pour l'étage 2.

Les durées des décharges électriques sont respectivement de l'ordre de quelques centaines de $\mu$s (entre 500 et 800 $\mu$s pour l'étage 1) et de quelques dizaines de $\mu$s (entre 40 et 60 $\mu$s pour l'étage 2).

Le temps mort entre deux décharges électriques consécutives varie entre 1 ms et 1 s.

On obtient la fragmentation des matériaux composites et la séparation des différents éléments constitutifs par une séparation sélective due à l'arc électrique qui traverse ces matériaux. Les produits récupérés sont : particules et fragments de verre, silicium, aluminium, polymères (ex : EVA) et le tedlar (fluorure polyvinylique).

**c) Fragmentation et dissociation des cartes et composants électroniques**

Le système polyfonctionnel, dit « Procédé polyfonctionnel » permet de séparer les différents composants des cartes électroniques. Selon les mêmes modalités que décrites précédemment : fragmentation électrocinétique par dilation et contraintes pulsées « explosives » séparent les composants métalliques conducteurs des cartes en fibres synthétiques. Les éléments composites en céramiques sont fragmentés en poudres fines et les constituants métalliques qu'ils contiennent sont récupérables par voie physique.

D'où la récupération possible de constituants valorisables tels que le cuivre, l'argent, l'or, des métaux rares, etc.

Les déchets d'équipements électriques et électroniques (cartes électroniques contenant de la bakélite, verre époxy simple et multicouches ; circuits imprimés composés de verre époxy simple et multicouches, couches de cuivre ; semi-conducteurs et circuits intégrés) sont soumis à des ondes mécaniques (Etage 1) et à la traversée des arcs électriques (Etage 2).

L'énergie utilisée est comprise entre 500 joules et 1000 joules pour l'effet direct (Etage 2) ; elle varie entre 5000 joules et 10000 joules dans le cas de l'effet indirect (Etage 1).

La fréquence de fonctionnement (de récurrence) varie entre 0.5 Hz et 2 Hz pour l'étage 1 et entre 1 Hz et 20 Hz pour l'étage 2.

Concernant cette application, on a choisi un temps mort de 300 ms pour l'étage 1 et de 10 ms pour l'étage 2.

Les constituants sont séparés par fragmentation et séparation sélective et les parties métalliques sont entièrement dégagées des composants en plastique.

Les constituants sont fragmentés, disloqués et dissociés à une granulométrie de 500 $\mu$m.

**d) Traitement de déchets industriels composés de fibres de carbone liées par des résines**

Les matériaux composites comprenant des fibres de carbone, de la résine et des métaux sont d'excellents candidats pour ledit système polyfonctionnel qui permet de désassembler les composites sans avoir recours à des produits chimiques.

On introduit deux électrodes dans un réacteur cylindrique à fond sphérique pour amplifier l'effet de l'onde de choc générée par les décharges électriques, la première électrode est multi-pointes liée à la borne positive et la deuxième est plane et liée à la masse (terre), sa forme et dimension dépendent des matériaux à traiter.

La valorisation des déchets industriels par le système polyfonctionnel se traduit par la séparation des constituants de départ à partir de quelques centaines de décharges électriques (énergie par décharge supérieur à 100 joules) selon des modalités comparables à la démonstration précédente : effet dynamique de fragmentation accompagné d'un effet électrocinétique. A partir de 300 impulsions on arrive à séparer la résine du matériau composite selon la conductivité propre des différents constituants. Cette résine reste piégée dans le milieu liquide ambiant. Une fois que la résine est séparée du matériau composite, on récupère des fibres de carbones pour une réutilisation sans traitement chimique particulier. Au microscope électronique ces fibres de carbone apparaissent totalement exempte de résine polymère. Elles sont localement érodées par des éclats en cupule et au delà d'un nombre donné d'impulsions, et présentent un phénomène d'enchevêtrement qui traduit des variations d'allongement et de dilatation dans les faisceaux de fibres traitées. Il est donc important de bien calibrer le nombre d'impulsions et la puissance de ces impulsions pour obtenir des fibres exemptes de résine et recyclable directement.

Pour cette application, l'énergie d'une décharge électrique peut varier entre 100 joules et 1000 joules pour l'étage 2 à effet direct, et entre 600 joules et 12000 joules pour l'étage 1 à effet indirect, sa durée est de l'ordre de quelques dizaines de microsecondes, et sa fréquence est comprise entre 2 Hz et 20 Hz pour l'étage 1 à effet indirect, et entre 1 Hz et 5 Hz pour l'étage 2 à effet direct.

**e) Séparation de rivets de fixation métalliques (par exemple titane ou aluminium) insérés dans une structure de base en fibres de carbone liée par des résines polymères thermodurcissables et de tout assemblage feuilleté métal/fibre de carbone ou fibre minérale.**

Les matériaux composites comprenant des fibres de carbone, de la résine et des métaux sont d'excellents candidats pour ledit système polyfonctionnel qui permet de désassembler les composites sans avoir recours à des produits chimiques.

On introduit deux électrodes dans un réacteur cylindrique à fond sphérique pour amplifier l'effet de l'onde de choc générée par les décharges électriques, la première électrode est multi-pointes liée à la borne positive et la deuxième est plane et liée à la masse (terre), sa forme et dimension dépendent des matériaux à traiter.

L'invention permet de séparer lesdits rivets de fixation ou les sandwiches métalliques du reste du matériau. L'emploi du système polyfonctionnel se traduit par la séparation des rivets de fixation à partir de quelques centaines de décharges électriques selon des modalités comparables a la démonstration précédente : effet dynamique de fragmentation accompagné d'un effet électrocinétique qui disloque les points de fixation de rivets et provoque leur arrachement.

Le traitement d'une structure à base de fibres de carbone par ce procédé permet d'obtenir après des fibres de carbones dont la taille varie selon le nombre d'impulsions électriques.

Pour cette application, l'énergie d'une décharge électrique peut varier entre 100 joules et 1000 joules pour l'étage 2 à effet direct, et entre 600 joules et 12000 joules pour l'étage 1 à effet indirect. sa durée est de l'ordre de quelques millisecondes, et sa fréquence est comprise entre 2 Hz et 40 Hz pour l'étage 1 à effet indirect, et entre 1 Hz et 5 Hz pour l'étage 2 à effet direct.

## 2.4. Fragmentation et broyage de poudre de diamants

Actuellement le broyage des poudres de diamants abrasifs se fait par attrition dans des broyeurs spécifiques. La durée de broyage pour obtenir une granulométrie de l'ordre de 20 microns est supérieure à la vingtaine d'heures. Il est encore quasiment impossible d'obtenir des diamants de dimensions nanométriques en quantité suffisante par ces méthodes classiques.

L'utilisation du système polyfonctionnel provoque une fragmentation électrocinétique par dilatation et contrainte pulsées « explosives » sur les cristaux de diamant traités, provoquant leur éclatement en esquilles à très fort taux d'abrasivité. Le temps de traitement pour obtenir 50% de grains à une taille inférieure à $50\,\mu m$ est de l'ordre de quelques minutes. Compte tenu du mode d'abrasion par écaillage du diamant, la granulométrie finale n'est limitée que par la durée et le nombre des impulsions. Il est donc parfaitement possible de réaliser des poudres de diamant de taille nanométrique, par cette technique.

La poudre des diamants est soumise à des ondes de choc mécaniques (Etage 1) afin de casser les particules fragiles, puis à la traversée des arcs électriques (Etage 2) pour fragmenter les particules les plus dures. Le résultat est la fragmentation et la micronisation des particules de diamants.

Une flottation de quelques particules très fines de diamants est observée, cela est du aux phénomènes de capillarité et mouillabilité. L'addition de produits tensioactifs permet la migration de ces particules de diamants au fond du réacteur pour mieux les exposer à l'arc électrique et à l'onde de choc, d'où une meilleure fragmentation et un meilleur broyage de la poudre de diamants.

A titre d'exemple, l'énergie déployée pour le traitement préalable de la poudre de diamant (diamètre compris entre 400 et 500 $\mu m$) dans le réacteur de l'étage 1 est de l'ordre de 4000 J par décharge électrique, après une application de 50 décharges électriques, la poudre de diamant récupérée est introduite dans le réacteur de l'étage 2 pour subir 1000 impulsions d'une énergie de 200 J par impulsion.

Les fréquences de fonctionnement (de récurrence) dans les étages 1 et 2 sont respectivement de l'ordre de 0.5 Hz (étage 1) et 2 Hz (étage 2).

Les temps morts entre deux décharges électriques consécutives sont de l'ordre de 500 ms pour l'étage 1 et 900 ms pour l'étage 2 (ce qui permet aux particules fines de diamant de se regrouper et de rejoindre le fond du réacteur afin de favoriser l'action de l'arc électrique et l'effet mécanique de l'onde de choc sur les particules du diamant).

Des produits tensioactifs sont ajoutés au liquide ambiant, afin de remédier aux effets de mouillabilité et de capillarité.

Un système de jets d'eau à l'intérieur des réacteurs empêche ou limite le contact des particules de diamant avec la cathode et réduit le traitement des impuretés.

La cathode est caractérisée par des propriétés ferromagnétiques permettant un traitement de séparation des impuretés par un champ magnétique.

Une granulométrie inférieure à 20 μm est sollicitée et est atteinte très rapidement (2 minutes environ).

Le degré d'abrasivité des diamants augmente au fur et à mesure de la fragmentation en réduisant la granulométrie des particules(tableau 3).

La médiane A/R du degré d'abrasivité des diamants est de l'ordre de 1.39 pour des diamants d'une taille de 180 μm à 300 μm ; elle passe à 1.55 pour pour une granulométrie de 50 μm à 70 μm et elle atteint 1.63 pour des diamants de tailles comprises entre 20 μm et 50 μm (voir tableau 3).

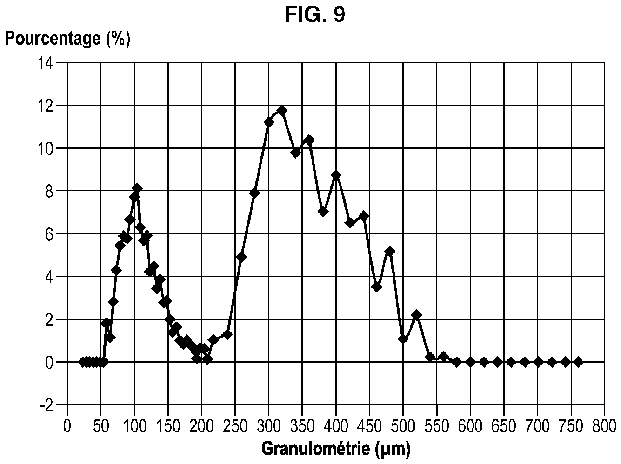

Le figure 9 montre la courbe granulométrique de la fragmentation de la poudre du diamant par le système polyfonctionnel, la présence de deux gaussiennes sur la courbe est expliquée par la réalisation de deux analyses granulométriques : une pour des particules ayant une granulométrtie inférieure à 180 μm et l'autre pour des particules dont la granulométrie est supérieure à 180 μm.

## 2.5. Récupération de bitume à partir des sables et schistes bitumineux

Un sable bitumineux (ou bitumeux) est un mélange de bitume brut, qui est une forme semi-solide de pétrole brut, de sable, d'argile minérale et de l'eau. En d'autres mots, c'est un sable enrobé d'une couche d'eau sur laquelle se dépose la pellicule de bitume. Plus la pellicule du bitume est épaisse, meilleurs sont les sables bitumineux. Après extraction et transformation des sables bitumineux, on obtient le bitume, qui est un mélange d'hydrocarbures sous forme solide, ou liquide dense, épais et visqueux. Les gisements de sable bitumineux représentent une importante source de pétrole brut de synthèse, ou non conventionnelle, se trouvent notamment en Alberta, Canada, et dans le bassin du fleuve d'Orénoque, au Venezuela. On estime que les réserves totales de sables et schistes bitumineux excèdent celles de pétrole dans le Monde.

Il existe aussi des gisements de schistes bitumineux et de calcaire bitumineux.

Le traitement des sables et schistes bitumineux est complexe et très difficile. Le broyage conventionnel ne permet pas de séparer le bitume de sa gangue stérile sablo-schisteuse et la présence de soufre est un lourd pénalisant pour les procédés de traitement thermique. Les différents solvants utilisés sont rendus inutilisables par la difficulté de broyer et séparer le bitume de son sable / Schiste hôte.

Le système polyfonctionnel utilisé pour le traitement des schistes et sables bitumineux a pour effet la dispersion entière des différents éléments constitutifs du sable et la séparation des grains de sables et argiles du bitume.

Les impulsions électriques émises dans un bac traversent le sable bitumineux, et les effets d'électrocinétique mécanique : (expansion / contraction) séparent les grains de sable du bitume. Le bitume lui même est fragmente en particules très fines et mis en suspension dans le milieu ambiant, et est donc aisément séparable de la matrice sableuse ou schisteuse.

Lesdits sables et schistes bitumineux sont soumis à des ondes mécaniques (Etage 1) et à la traversée d'arcs électriques (Etage 2). Ce traitement permet de fragmenter les dits sables et schistes bitumineux et de séparer complètement les hydrocarbures de leur matrice sablo-schisteuse.

Les chaines longues des hydrocarbures sont brisées et réduites à des chaines courtes (C8 à C40, figures 7a et 7b) appartenant à des substances liquides et solides et donnant naissance également à des substances volatiles (gaz).

L'énergie utilisée est comprise entre 50 joules et 1000 joules pour l'effet direct (Etage 2), et varie entre 1000 joules et 50000 joules dans le cas de l'effet indirect (Etage 1).

La fréquence de fonctionnement (de récurrence) varie entre 0.5 Hz et 2 Hz pour l'étage 1 ; entre 1 Hz et 20 Hz pour l'étage 2.

Avec l'effet direct, la durée moyenne des décharges électriques varie entre 40 et 60 μs, alors qu'avec l'effet indirect, elle est comprise entre 200 et 800 μs.

Les temps morts entre deux décharges électriques consécutives sont de l'ordre de 200 ms pour l'étage 1 et 10 ms pour l'étage 2.

Les effets électrocinétiques et chimiques :

La charge électrique de très haute énergie du matériaux et la situation particulière du milieu ambiant lors de l'impulsion (transition entre une phase conductrice et une phase résistante, génération d'ions $OH^-$ et $H^+$ libres en contact avec un milieu hautement énergétique, excitation des couches atomiques externes dans molécules longues d'hydrocarbures (C300 à C400) entrainent la rupture des liaisons « faibles » à l'intérieur de ces molécules longues en les transformant en alcanes de chaines linéaires et ramifiées et plus courtes (C8 à C12, figure 7a ; C20 à C40, figure 7b).

Le traitement présente donc le double avantage :

- d'accroître la fragmentation et la libération des constituants unitaires du schiste et sable bitumineux à des granulométries inférieures à celles communément obtenues, d'ou un gain de temps et d'énergie très significatif, d'une part, et
- de favoriser le craquage du bitume par voie d'électrocinétique chimique sans passer par des réactifs et autres traitements polluants, d'autre part.

## 2.6. Dépollution des sols et boues contaminés par des métaux lourds et hydrocarbures

Le procédé peut être utilisé pour dépolluer des sols et boues contaminés par des métaux lourds (Arsenic, Plomb, Cadmium, Chrome, Cuivre, Nickel, Zinc et Mercure) et hydrocarbures (C10 à C40 : état liquide et solide, hydrocarbures aromatiques)

A cet effet, les sols et boues contaminés par des métaux lourds et hydrocarbures sont soumis à des ondes mécaniques (Etage 1) et à la traversée d'arcs électriques (Etage 2).

Ceci permet de séparer les différents éléments constitutifs des sols et boues contaminés par des métaux lourds et hydrocarbures par fragmentation et séparation sélective.

On récupère alors des hydrocarbures (C10 à C40 : état liquide et solide, hydrocarbures aromatiques) et des métaux lourds (Arsenic, Plomb, Cadmium, Chrome, Cuivre, Nickel, Zinc et Mercure).

L'énergie utilisée est comprise entre 50 joules et 1000 joules pour l'effet direct (Etage 2) ; elle varie entre 1000 joules et 50000 joules dans le cas de l'effet indirect (Etage 1).

La fréquence de fonctionnement (de récurrence) variant entre 0.5 Hz et 2 Hz pour l'étage 1 et entre 1 Hz et 20 Hz pour l'étage 2.

Le temps mort entre deux décharges électriques consécutives est de l'ordre de 10 ms dans l'étage 2 et 300 ms dans l'étage 1.

Avec l'effet direct, la durée moyenne des décharges électriques varie entre 40 et 60 $\mu$s, alors qu'avec l'effet indirect, elle est comprise entre 200 et 800 $\mu$s.

## 2.7. Valorisation de composants uranifères dans les barreaux de combustibles nucléaires

Une autre application envisageable est la valorisation de composants uranifères dans les barreaux de combustibles nucléaires.

La fragilisation et la fragmentation des éléments en céramique constituant les barreaux de combustibles nucléaires se produisent une fois que les produits sont soumis à des ondes mécaniques (Etage 1) et à la traversée des arcs électriques (Etage 2).

Une des trois électrodes d'un réacteur de l'Etage 2 peut être remplacée par un barreau irradié. Un réacteur sous forme d'une chambre cylindrique est adapté aux barreaux irradiés à traiter avec une électrode multi-pointes où chaque pointe ou tige (figure 4 et 5) est remplacée par un barreau irradié permet de favoriser la dispersion des grains dans le milieu liquide pour permettre un tri gravimétrique des produits. Avec une électrode multi-pointes, un nombre important de barreaux irradiés peut être traité à la fois par le procédé polyfonctionnel.

L'énergie utilisée est comprise entre 500 joules et 1000 joules pour l'effet direct (Etage 2) ; elle varie entre 5000 joules et 10000 joules dans le cas de l'effet indirect (Etage 1).

La fréquence de fonctionnement (de récurrence) varie entre 0.5 Hz et 2 Hz pour l'étage 1 et entre 1 Hz et 20 Hz pour l'étage 2.

Le temps mort entre deux décharges électriques consécutives varie entre 1 ms et 1 s.

Avec l'effet direct, la durée moyenne des décharges électriques varie entre 40 et 60 $\mu$s, alors qu'avec l'effet indirect, elle est comprise entre 200 et 800 $\mu$s.

## Revendications

1. Procédé de valorisation de matériaux et/ou produits par puissance pulsée selon lequel on génère une succession de décharges électriques entre au moins deux électrodes dans un réacteur recevant un liquide ambiant ainsi que les matériaux et/ou produits à valoriser, dans lequel la succession desdites décharges électriques produit, du fait de l'énergie, de la fréquence des décharges électriques, ainsi que du fait de la tension entre les électrodes et le temps de commutation, une onde de choc mécanique qui se propage sur les matériaux et/ou produits à traiter dans le réacteur, **caractérisé en ce qu'**après une première étape de fragilisation par l'onde de choc mécanique ainsi produite, on fait subir aux produits et/ou matériaux une succession de décharges électriques dont l'énergie, la tension entre les électrodes qui les génèrent, le temps de commutation et la fréquence de décharge sont choisis telles que lesdites décharges réalisent un broyage du matériau par effet direct des décharges électriques et en **caractérisé en ce qu'**on met en oeuvre un séchage des matériaux et/ou produits par induction thermique due à une génération de micro-ondes.

2. Procédé selon la revendications précédente, dans lequel l'étape de séchage intervient à l'issue de l'étape de broyage par effet direct.

3. Procédé selon la revendications 1 dans lequel l'étape de séchage est une étape de fragilisation des matériaux ou produits, qui intervient préalablement à l'étape de broyage par effet direct.

4. Procédé selon l'une des revendications précédentes dans lequel l'énergie d'une décharge électrique d'une succession de décharges produisant une onde de choc mécanique est comprise entre 1000 joules et 50000 joules.

5. Procédé selon l'une des revendications précédentes, dans lequel la fréquence de fonctionnement d'une succession de décharges produisant une onde de choc mécanique est comprise entre 0.5 Hz et 40 Hz.

6. Procédé selon l'une des revendications précédentes dans lequel l'énergie d'une décharge électrique d'une succession de décharges produisant un broyage du matériau par effet direct d'arcs électriques est comprise entre 50 joules et 1000 joules.

7. Procédé selon l'une des revendications précédentes, dans lequel la fréquence de fonctionnement d'une succession de décharges produisant un broyage du matériau par effet direct d'arcs électriques est comprise entre 1 Hz et 20 Hz pour l'étage 2.

8. Procédé selon l'une des revendications précédentes, dans lequel le temps mort entre deux décharges électriques consécutives varie entre 1 ms et 1 s.

9. Procédé selon l'une des revendications précédentes, dans lequel le temps de commutation d'une décharge d'une succession de décharges produisant une onde de choc est supérieur à 500 ns.

10. Procédé selon l'une des revendications précédentes, dans lequel le temps de commutation d'une décharge d'une succession de décharges produisant un broyage de matériaux par effet direct d'arcs électriques est inférieur à 500 ns.

11. Système de valorisation de matériaux et/ou produits par puissance pulsée comportant au moins un réacteur recevant un liquide ambiant ainsi que les matériaux et/ou produits à valoriser, ainsi qu'au moins deux électrodes et des moyens d'alimentation aptes à être commandés pour générer entre lesdites électrodes une succession de décharges électriques, dans lequel les moyens d'alimentation et leur commande sont aptes à ajuster l'énergie, la fréquence des décharges électriques, ainsi que la tension entre les électrodes et le temps de commutation, pour que la succession des décharges électriques produise une onde de choc mécanique qui se propage sur les matériaux et/ou produits à traiter dans le réacteur, caractérisé en de que ledit système comporte au moins deux étages de réacteur(s), l'un pour la fragilisation produits et/ou matériaux par une onde de choc mécanique générée par effet indirect d'arc électrique, ainsi qu'au moins un autre pour le broyage des matériaux et/ou produits par effet direct des décharges électriques et en ce qu'au moins un réacteur comporte un module de génération des micro-ondes pour le séchage des matériaux et/ou produits.

12. Système selon la revendication précédente, dans lequel un réacteur d'un étage pour le broyage des matériaux et/ou produits par effet direct des décharges électriques comporte des sphères élastomères ayant une raideur supérieure à 1 N/cm.

13. Système selon l'une des revendications 11 à ou 12, dans lequel un réacteur comporte au moins un couple d'électrodes de forme pointe/pointe ou de forme pointe/plane.

14. Système selon l'une des revendications 11 à 13, dans lequel un réacteur a une forme polyédrique ou cylindrique à fond sphérique.

15. Procédé selon la revendication 1, dans lequel lesdits matériaux et/ou produits sont choisis parmi la liste suivante :

- minerais et/ou minéraux,
- déchets d'équipements électriques et électroniques,
- poudre de diamants,
- sables et schistes bitumineux,
- sols et boues contaminés par des métaux lourds tels que l'Arsenic, le Plomb, le Cadmium, le Chrome, le Cuivre, le Nickel, le Zinc, le Mercure, et des hydrocarbures tels que les hydrocarbures aromatiques, les hydrocarbures de type C10 à C40 à l'état liquide et solide,
- matériaux composites constitués de couches de verre, films en plastique et résine telle que l'acrylobutadiène styrène, et matériaux composites comprenant des fibres de carbone,
- panneaux photovoltaïques composés de verre trempé, de polymères, de silicium, d'aluminium et de tedlar (fluorure polyvinylique).

16. Système selon la revendication 11, dans lequel lesdits matériaux et/ou produits sont choisis parmi la liste suivante :

- minerais et/ou minéraux,
- déchets d'équipements électriques et électroniques,
- poudre de diamants,
- sables et schistes bitumineux,
- sols et boues contaminés par des métaux lourds tels que l'Arsenic, le Plomb, le Cadmium, le Chrome, le Cuivre, le Nickel, le Zinc, le Mercure, et des hydrocarbures tels que les hydrocarbures aromatiques, les hydrocarbures de type C10 à C40 à l'état liquide et solide,
- matériaux composites constitués de couches de verre, films en plastique et résine telle que l'acrylobutadiène styrène, et matériaux composites comprenant des fibres de carbone,
- panneaux photovoltaïques composés de verre trempé, de polymères, de silicium, d'aluminium et de tedlar (fluorure polyvinylique).

17. Système de valorisation selon la revendication 11 dans lequel lesdits matériaux et/ou produits sont de la poudre de diamant, **caractérisé en ce qu'**il comprend un système de jets d'eau à l'intérieur des réacteurs apte à empêcher ou à limiter le contact des particules de diamants avec la cathode et à réduire le traitement des impuretés.

18. Système de valorisation selon la revendication 11 dans lequel lesdits matériaux et/ou produits sont de la poudre de diamant, **caractérisé en ce que** la cathode desdites électrodes a des propriétés ferromagnétiques permettant un traitement de séparation des impuretés par un champ magnétique.

19. Système de valorisation selon la revendication 11 dans lequel lesdits matériaux et/ou produits sont des sols et boues contaminées par des métaux lourds tels que l'Arsenic, le Plomb, le Cadmium, le Chrome, le Cuivre, le Nickel, le Zinc, le Mercure, et des hydrocarbures tels que les hydrocarbures aromatiques, les hydrocarbures de type C10 à C40 à l'état liquide et solide, comprenant un ensemble d'électrodes adaptées et associées à un module de stockage d'énergie mobile permet de traiter lesdits sols et boues contaminés par des métaux lourds et hydrocarbures in situ, ce qui consiste en un traitement de la matière contaminée sur place et en l'extraction et la récupération des polluants tels que Arsenic, Plomb, Cadmium, Chrome, Cuivre, Nickel, Zinc, Mercure, Hydrocarbures C10-C40 et Hydrocarbures aromatiques.

## Patentansprüche

1. Valorisierungsverfahren von Materialien und / oder Produkten per gepulster Leistung, gemäß dem eine Folge von elektrischen Entladungen zwischen wenigstens zwei Elektroden in einem Reaktor generiert wird, der eine umgebende Flüssigkeit sowie die zu valorisierenden Materialien und / oder Produkte aufnimmt, bei dem die Folge der genannten elektrischen Entladungen aufgrund der Energie, der Frequenz der elektrischen Entladungen sowie aufgrund der Spannung zwischen den Elektroden und der Umschaltzeit eine mechanische Schockwelle produziert, sich auf die in dem Reaktor zu behandelnden Materialien und / oder Produkte verbreitet, und bei denen nach einem ersten Fragilisierungsschritt durch die auf diese Weise produzierte Schockwelle die Produkte und / oder Materialien einer Folge von elektrischen Entladungen unterzogen werden, deren Energie, deren Spannung zwischen den Elektroden, die sie generieren, deren Umschaltzeit und deren Entladungsfrequenz derart ausgewählt sind, dass die genannten Entladungen eine Zerkleinerung des Materials per direkter Wirkung der elektrischen Entladungen realisieren, **dadurch gekennzeichnet, dass** ein Trocknen der Materialien und / oder Produkte per thermischer Induktion aufgrund eines Generierens von Mikro-Wellen umgesetzt wird.

2. Verfahren gemäß dem voranstehenden Anspruch, bei dem der Trocknungsschritt nach Abschluss des Zerkleinerungsschritts per direkter Wirkung erfolgt.

3. Verfahren gemäß Anspruch 1, bei dem der Trocknungsschritt ein Fragilisierungsschritt der Materialien oder Produkte ist, der vor dem Zerkleinerungsschritt per direkter Wirkung erfolgt.

**4.** Verfahren gemäß einem der voranstehenden Ansprüche, bei dem die Energie einer elektrischen Entladung einer Folge von Entladungen, die eine mechanische Schockwelle produzieren, zwischen 1.000 Joule und 50.000 Joule inbegriffen ist.

**5.** Verfahren gemäß einem der voranstehenden Ansprüche, bei dem die Betriebsfrequenz einer Folge von Entladungen, die eine mechanische Schockwelle produzieren, zwischen 0,5 Hz und 40 Hz inbegriffen ist.

**6.** Verfahren gemäß einem der voranstehenden Ansprüche, bei dem die Energie einer elektrischen Entladung einer Folge von Entladungen, die ein Zerkleinern des Materials per direkter Wirkung von elektrischen Lichtbögen produzieren, zwischen 50 Joule und 1000 Joule inbegriffen ist.

**7.** Verfahren gemäß einem der voranstehenden Ansprüche, bei dem die Betriebsfrequenz einer Folge von Entladungen, die ein Zerkleinern des Materials per direkter Wirkung von elektrischen Lichtbögen produzieren, für den Schritt 2 zwischen 1 Hz und 20 Hz inbegriffen ist.

**8.** Verfahren gemäß einem der voranstehenden Ansprüche, bei dem die Totzeit zwischen zwei konsekutiven elektrischen Entladungen zwischen 1 ms und 1 Sek. variiert.

**9.** Verfahren gemäß einem der voranstehenden Ansprüche, bei dem die Umschaltzeit einer Entladung einer Folge von Entladungen, die eine mechanische Schockwelle produzieren, größer ist als 500 ns.

**10.** Verfahren gemäß einem der voranstehenden Ansprüche, bei dem die Umschaltzeit einer Entladung einer Folge von Entladungen, die ein Zerkleinern von Materialien per direkter Wirkung von elektrischen Lichtbögen produzieren, kleiner ist als 500 ns.

**11.** Valorisierungssystem von Materialien und / oder Produkten per gepulster Leistung, umfassend wenigstens einen eine umgebende Flüssigkeit aufnehmenden Reaktor sowie die zu valorisierenden Materialien und / oder Produkte, sowie wenigstens zwei Elektroden und Versorgungsmittel, die geeignet sind, um gesteuert zu werden, um zwischen den genannten Elektroden eine Folge von elektrischen Entladungen zu generieren, bei dem die Versorgungsmittel und ihre Steuerung geeignet sind, um die Energie, die Frequenz der elektrischen Entladungen sowie die Spannung zwischen den Elektroden und die Umschaltzeit anzupassen, damit die Folge der elektrischen Entladungen eine mechanische Schockwelle produziert, die sich auf den in dem Reaktor zu behandelnden Materialien und / oder Produkten verbreitet, wobei das genannte System wenigstens zwei Reaktoretagen umfasst, eine für die Fragilisierung von Produkten und / oder Materialien durch eine mechanische Schockwelle, die per indirekter Wirkung des elektrischen Lichtbogens generiert wird, sowie wenigstens eine andere zum Zerkleinern der Materialien und / oder Produkte per direkter Wirkung der elektrischen Entladungen, **dadurch gekennzeichnet, dass** wenigstens ein Reaktor ein Generierungsmoduls der Mikrowellen zum Trocknen der Materialien und / oder Produkte umfasst.

**12.** System gemäß dem voranstehenden Anspruch, bei dem ein Reaktor mit einer Etage zum Zerkleinern der Materialien und / oder Produkte per direkter Wirkung der elektrischen Entladungen Elastomer-Bereiche mit einer Steifigkeit von mehr als 1 N/cm umfasst.

**13.** System gemäß einem der Ansprüche 11 oder 12, bei dem ein Reaktor wenigstens ein Elektrodenpaar in Spitzen-/Spitzenform oder in Spitzen-/Ebenenform umfasst.

**14.** System gemäß einem der Ansprüche 11 bis 13, bei dem ein Reaktor eine polyedrische oder zylindrische Form mit sphärischem Boden hat.

**15.** Verfahren gemäß Anspruch 1, bei dem die genannten Materialien und / oder Produkte aus der folgenden Liste ausgewählt sind:

- Erzen und / oder Mineralien,
- Abfällen von elektrischen und elektronischen Ausrüstungen,
- Diamantstaub,
- bituminöser Sand und Schiefer,
- von Schwermetallen, wie z. B. Arsen, Blei, Kadmium, Chrom, Kupfer, Nickel, Zink, Quecksilber und Kohlenwasserstoffen, wie z. B. aromatischen Kohlenwasserstoffen, Kohlenwasserstoffen vom Typ C10 bis C40 im flüssigen und festen Zustand kontaminierten Böden und Schlämmen,

- Verbundmaterialien, die aus Glasschichten, Plastik- und Harzfolien gebildet sind, wie z. B. Styrol-Acrylbutadien, und Verbundmaterialien, die Kohlenstofffasern umfassen,
- Solarpaneele, die sich aus gehärtetem Glas, Polymeren, Silizium, Aluminium und Tedlar (Polyvinylfluorid) zusammensetzen.

**16.** System gemäß Anspruch 11, bei dem die genannten Materialien und / oder Produkte aus der folgenden Liste ausgewählt sind:

- Erzen und / oder Mineralien,
- Abfällen von elektrischen und elektronischen Ausrüstungen,
- Diamantenstaub,
- bituminöser Sand und Schiefer,
- von Schwermetallen, wie z. B. Arsen, Blei, Kadmium, Chrom, Kupfer, Nickel, Zink, Quecksilber und Kohlenwasserstoffen, wie z. B. aromatischen Kohlenwasserstoffen, Kohlenwasserstoffen vom Typ C10 bis C40 im flüssigen und festen Zustand kontaminierten Böden und Schlämmen,
- Verbundmaterialien, die aus Glasschichten, Plastik- und Harzfolien gebildet sind, wie z. B. Styrol-Acrylbutadien, und Verbundmaterialien, die Kohlenstofffasern umfassen,
- Solarpaneele, die sich aus gehärtetem Glas, Polymeren, Silizium, Aluminium und Tedlar (Polyvinylfluorid) zusammensetzen.

**17.** Valorisierungssystem gemäß Anspruch 11, bei dem die genannten Materialien und / oder Produkte Diamantstaub sind, **dadurch gekennzeichnet; dass** es ein Wasserstrahlsystem im Innern der Reaktoren umfasst, das geeignet ist, den Kontakt der Diamantpartikel mit der Kathode zu begrenzen und die Behandlung der Verunreinigungen zu reduzieren.

**18.** Valorisierungssystem gemäß Anspruch 11, bei dem die genannten Materialien und / oder Produkte Diamantstaub sind, **dadurch gekennzeichnet, dass** die Kathode der genannten Elektroden ferromagnetische Eigenschaften hat, die eine Trennungsbehandlung der Verunreinigungen durch ein Magnetfeld zulassen.

**19.** Valorisierungssystem gemäß Anspruch 11, bei dem die genannten Materialien und / oder Produkte von Schwermetallen, wie z. B. Arsen, Blei, Kadmium, Chrom, Kupfer; Nickel, Zink, Quecksilber und Kohlenwasserstoffen, wie z. B. aromatischen Kohlenwasserstoffen, Kohlenwasserstoffen vom Typ C10 bis C40 im flüssigen und festen Zustand kontaminierte Böden und Schlämme sind, umfassend eine Gruppe von Elektroden, die für ein mobiles Energiespeichermodul geeignet und diesem zugeordnet sind, das die Behandlung der genannten, von Schwermetallen und Kohlenwasserstoffen kontaminierten Böden und Schlämme in situ zulässt, was in einer Behandlung des kontaminierten Materials vor Ort und in der Extraktion und der Wiedergewinnung von Kontaminanten, wie z. B. Arsen, Blei, Kadmium, Chrom, Kupfer; Nickel, Zink, Quecksilber, Kohlenwasserstoffen C10 bis C40 und aromatischen Kohlenwasserstoffen besteht.

**Claims**

**1.** Method for reusing materials and/or products by pulsed power according to which a series of electrical discharges are generated between at least two electrodes in a reactor containing an ambient liquid as well as the materials and/or products to be reused, in which the series of said electrical discharges produces, as a result of the energy, the frequency of the electrical discharges, as well as due to the voltage between the electrodes and the switching time, a mechanical shockwave that propagates over the materials and/or products to be treated in the reactor, and in which after a first step of weakening by the mechanical shockwave thereby produced, the products and/or materials are subjected to a series of electrical discharges of which the energy, the voltage between the electrodes that generate them, the switching time and the discharge frequency are chosen such that said discharges carry out a milling of the material by direct effect of the electrical discharges, **characterised in that** a drying of the materials and/or products is implemented by thermal induction due to a generation of microwaves.

**2.** Method according to the preceding claim, in which the drying step takes place at the end of the step of milling by direct effect.

**3.** Method according to claim 1, in which the drying step is a step of weakening of the materials or products, which takes place prior to the step of milling by direct effect.

4. Method according to one of the preceding claims, in which the energy of an electrical discharge of a series of discharges producing a mechanical shockwave is between 1000 joules and 50000 joules.

5. Method according to one of the preceding claims, in which the operating frequency of a series of discharges producing a mechanical shockwave is between 0.5 Hz and 40 Hz.

6. Method according to one of the preceding claims, in which the energy of an electrical discharge of a series of discharges producing a milling of the material by direct effect of electric arcs is between 50 joules and 1000 joules.

7. Method according to one of the preceding claims, in which the operating frequency of a series of discharges producing a milling of the material by direct effect of electric arcs is between 1 Hz and 20 Hz for stage 2.

8. Method according to one of the preceding claims, in which the downtime between two consecutive electrical discharges varies between 1 ms and 1 s.

9. Method according to one of the preceding claims, in which the switching time of a discharge of a series of discharges producing a shockwave is greater than 500 ns.

10. Method according to one of the preceding claims, in which the switching time of a discharge of a series of discharges producing a milling of material by direct effect of electric arcs is less than 500 ns.

11. System for reusing material and/or products by pulsed power comprising at least one reactor containing an ambient liquid as well as the materials and/or products to be reused, as well as at least two electrodes and supply means able to be commanded to generate between said electrodes a series of electrical discharges, in which the supply means and their command are able to adjust the energy, the frequency of the electrical discharges, as well as the voltage between the electrodes and the switching time, so that the series of electrical discharges produce a mechanical shockwave which propagates over the materials and/or products to be processed in the reactor, said system comprising at least two stages of reactor (s), one for the weakening of the products and/or materials by a mechanical shockwave generated by indirect effect of electric arc, as well as least one other for the milling of the materials and/or products by direct effect of the electrical discharges, **characterised in that** at least one reactor comprises a module for generating microwaves for drying the materials and/or products.

12. System according to the preceding claim, in which a reactor of a stage for the milling of the materials and/or products by direct effect of the electrical discharges comprises elastomeric spheres having a stiffness greater than 1 N/cm.

13. System according to one of claims 11 or 12, in which a reactor comprises at least one pair of electrodes of point/point shape or point/flat shape.

14. System according to one of claims 11 to 13, in which a reactor has a polyhedral or cylindrical shape with a spherical bottom.

15. Method according to claim 1, in which said materials and/or products are chosen from the following list:

> - ores and/or minerals,
> - waste electrical and electronic equipment,
> - diamond powder,
> - bituminous sands and shales,
> - soils and sludges contaminated by heavy metals such as arsenic, lead, cadmium, chromium, copper, nickel, zinc, mercury, and hydrocarbons such as aromatic hydrocarbons, hydrocarbons of type C10 to C40 in the liquid and solid state,
> - composite materials constituted of layers of glass, films made of plastic and resin such as acrylo butadiene styrene, and composite materials comprising carbon fibres,
> - photovoltaic panels composed of tempered glass, polymers, silicon, aluminium and Tedlar (polyvinyl fluoride).

16. System according to claim 11, in which said materials and/or products are chosen from the following list:

> - ores and/or minerals,
> - waste electrical and electronic equipment,

- diamond powder,
- bituminous sands and shales,
- soils and sludges contaminated by heavy metals such as arsenic, lead, cadmium, chromium, copper, nickel, zinc, mercury, and hydrocarbons such as aromatic hydrocarbons, hydrocarbons of type C10 to C40 in the liquid and solid state,
- composite materials constituted of layers of glass, films made of plastic and resin such as acrylo butadiene styrene, and composite materials comprising carbon fibres,
- photovoltaic panels composed of tempered glass, polymers, silicon, aluminium and Tedlar (polyvinyl fluoride).

**17.** System for reusing materials and/or products according to claim 11 in which said materials and/or products are diamond powder, **characterised in that** it comprises a system of water jets inside the reactors able to prevent or limit the contact of the particles of diamonds with the cathode and to reduce the processing of impurities.

**18.** System for reusing materials and/or products according to claim 11 in which said materials and/or products are diamond powder, **characterised in that** the cathode of said electrodes has ferromagnetic properties enabling a treatment of separation of impurities by a magnetic field.

**19.** System for reusing materials and/or products according to claim 11 in which said materials and/or products are soils and sludges contaminated by heavy metals such as arsenic, lead, cadmium, chromium, copper, nickel, zinc, mercury, and hydrocarbons such as aromatic hydrocarbons, hydrocarbons of type C10 to C40 in the liquid and solid state, comprising a series of electrodes adapted and associated with a mobile energy storage module making it possible to treat said soils and sludges contaminated by heavy metals and hydrocarbons in situ, which consists in a treatment of the contaminated material on the spot and in the extraction and the recovery of pollutants such as arsenic, lead, cadmium, chromium, copper, nickel, zinc, mercury, hydrocarbons C10-C40 and aromatic hydrocarbons.

# FIG. 1

Matériaux et produits

Chargement

| Etage 1 | R(1,1)<br>Broyage | R(1,2) |

Déchargement
de R(1,1)

| Etage 2 | R(2,1) | R(2,2)<br>Broyage |

Déchargement
de R(2,2)

| Etage 3 | R(3,1)<br>Séchage | R(3,2) |

Déchargement
de R(3,1)

# FIG. 2

OCM

R(1,1)
R(1,2,)

Etage 1

NH

(E1)'
(E1)

M1

M2

(E2)
(E2)'

(E3)'
(E3)

M3

NB

P

# FIG. 3

M1

NH

Etage 2

(E1)

(E2)'

M2

(E2)

(E3)'

(E3)

M3

NB

P

(E1)'

**FIG. 4a**

**FIG. 4b**

E1,E2,E3

O

MP

**FIG. 5a**

**FIG. 5b**

E1,E2,E3

O

PC

EP 2 396 117 B1

# FIG. 6

24

## FIG. 7a

## FIG. 7b

# Tableau 1

| MnO | C | Fe2O3 | S | Zn | Cd |
|---|---|---|---|---|---|
| % | % | % | % | % | mg/Kg |
| 0,16 | 0,08 | 19,6 | 36,8 | 37 | 704 |

| Co | Cu | Mo | Sn | Sr |
|---|---|---|---|---|
| mg/Kg | mg/Kg | mg/Kg | mg/Kg | mg/Kg |
| 68 | 312 | 28 | 100 | 28 |

## FIG. 8

## Tableau 2

| Energie par décharge = 200J, temps mort = 10ms, durée de la décharge = 50 µs, temps de commutation = 300 ns | | | | |
|---|---|---|---|---|
| Nombre de décharges | 300 | | 260 | |
| Granulométrie et taux de libération | 200 µm % libération | 100 µm % libération | 200 µm % libération | 100 µm % libération |
| Chalcopyrite | 5 | 12 | 5 | 53 |
| Sphalerite | 67 | 83 | 70 | 88 |
| Pyrite | 72 | 78 | 75 | 73 |
| Spyrrhotite | <5 | 6 | 8 | 37 |
| Non-opaque | 87 | 73 | 72 | 86 |

## Tableau 3

| Granulométrie du diamant (µm) | 180 - 300 | 50 - 70 | 20 - 50 |
|---|---|---|---|
| Degré d'abrasivité (médiane) | 1.39 | 1.55 | 1.63 |
| Degré d'abrasivité (moyenne) | 1.42 | 1.73 | 1.79 |

FIG. 9

## RÉFÉRENCES CITÉES DANS LA DESCRIPTION

**Documents brevets cités dans la description**

- JP 10180133 A
- WO 2008017172 A
- WO 2005032722 A
- US 4540127 A
- CA 2555476
- EP 1375004 A
- DE 102004041287